**Europäisches Patentamt**

**European Patent Office**

**Office européen des brevets**

(19)

(11) Veröffentlichungsnummer: **0 000 371**
**B1**

(12) **EUROPÄISCHE PATENTSCHRIFT**

(21) Anmeldenummer: **78100307.4**

(22) Anmeldetag: **05.07.78**

(51) Int. Cl.³: **C 08 L 67/06**

(54) **Dispersionen von Pulvern in monomerenfreien ungesättigten Polyestern und ihre Verwendung als Hilfsmittel in vernetzbaren ungesättigten Polyestern**

(30) Priorität: **12.07.77 DE 2731320**

(43) Veröffentlichungstag der Anmeldung:
**24.01.79 Patentblatt 79/02**

(45) Bekanntmachung des Hinweises auf die Patenterteilung:
**25.06.80 Patentblatt 80/13**

(84) Benannte Vertragsstaaten:
**DE FR GB NL SE**

(56) Entgegenhaltungen:
**DE - A - 2 223 989**
**US - A - 2 628 209**
**FR - A - 2 207 877**

(73) Patentinhaber: **Bayer AG Zentralbereich Patente, Marken und Lizenzen**
**D - 5090 Leverkusen 1, Bayerwerk (DE)**

(72) Erfinder: **Schulz-Walz, Hansjochen, Dr.**
**Am Egelsberg 30**
**D - 4150 Krefeld (DE)**
**Hess, Bernhard, Dr.**
**Kaldenhausener Strasse 84**
**D - 4130 Moers 2 (DE)**
**Beckers, Johannes**
**Bartzweg 1**
**D - 4152 Kempen 4 (DE)**
**Klöker, Werner, Dr.**
**Deswatinesstrasse 26**
**D - 4150 Krefeld 1 (DE)**

EP 0 000 371 B1

## Dispersionen von Pulvern in monomerenfreien ungesättigten Polyestern und ihre Verwendung als Hilfsmittel in vernetzbaren ungesättigten Polyestern

Die vorliegende Erfindung betrifft Dispersionen pulveriger Substanzen in ungesättigten Polyestern, die frei von copolymerisierbaren Monomeren sind. Diese erfindungsgemässen Dispersionen stellen eine ausgezeichnete Form dar, in der Eindickungsmittel, Pigmente, Füllstoffe und andere feste Hilfsmittel in fein verteilter Form ungesättigten Polyesterharzen zugemischt werden können.

Aus der DT — OS 2 223 989 sind Gemische aus anorganischen Eindickungsmitteln, also vorzugsweise Oxiden und Hydroxiden der Elemente der 2. und 3. Hauptgruppe (Gruppen II a und III a) des Periodensystems, und eines Polyesters mit Säurezahlen von 5 bis 50 und Hydroxylzahlen von 100 bis 300 bekannt. Durch Einbau von Resten einwertiger Alkohole als Kettenabbrecher besitzt dieser Polyester eine relativ geringe Viskosität, so dass er zur Aufnahme beträchtlicher Mengen anorganischer Eindickungsmittel geeignet ist und als Grundlage für eine Eindickungspaste dienen kann. Da seine Viskosität bei Zusatz von Eindickungsmitteln kaum ansteigt, können die daraus hergestellten Eindickungspasten lange gelagert werden.

Solche Gemische gewinnen inzwischen stark an Bedeutung, da bei der Herstellung von Harzmatten das Mischen der Ansätze weitgehend automatisiert worden ist. Dabei wünscht man in der Regel die Mischung kontinuierlich durchzuführen, was voraussetzt, daß die verwendeten festen oder pulverförmigen Zuschlagstoffe, wie Füllstoffe, Pigmente und Eindickungsmittel usw., vorher in einer geeigneten Flüssigkeit angepastet oder — bei höheren Qualitätsanforderungen — auf dem Walzenstuhl angerieben werden. Die Füllstoffe, wie Kreide, Dolomit, Kaolin oder andere, werden, da die Menge etwa der Menge des Polyesterharzes entsprechen, üblicherweise in diesem angeteigt. Die Pigmente wurden bisher ebenfalls in dem verwendeten Polyesterharz angerieben, während andere, kleinere Mengen fester Zusätze, wie beispielsweise Eindickungsmittel, Trennmittel oder Thixotropiermittel, als Pulver zugegeben werden. Bei kontinuierlichen Mischanlagen ist es aus mischungstechnischen Gründen notwendig, alle Bestandteile als Pasten zuzuführen, wobei aus Rationalisierungsgründen ein einheitliches Pastenharz notwendig ist.

Oft werden solche Pasten auch in einer oder zwei Mischpasten vereinigt, da es leichter ist, größere Mengen einer Paste als kleine Mengen verschiedener Pasten kontinuierlich genau zu dosieren. Diese technischen Anforderungen bringen es mit sich, daß die Menge der zugeführten Pastengrundlage größer wird als bisher üblich. Es werden oft Mengen von 10 — 15 Gewichtsteilen auf 100 Gewichtsteile des verwendeten Polyesterharzes benötigt. Wegen dieser großen Menge scheiden übliche, flüssige Weichmacher, außer aus den bereits genannten Gründen, vor allem deswegen aus, weil sie beim Härten des Polyesterharzes nicht mit einpolymerisieren und infolgedessen zum Ausschwitzen neigen. Außerdem werden die mechanischen, thermischen und elektrischen Eigenschaften der Härtungsprodukte erheblich verschlechtert.

Übliche, styrolhaltige ungesättigte Polyesterharze sind nicht zu verwenden, da sie zu vorzeitiger Polymerisation neigen. Vor allem bestimmte Pigmentpasten erreichen nicht die gewünschte Lagerstabilität. Gerade bei Pigmentpasten ist es aber vielfach erforderlich, um Farbkonstanz gewährleisten zu können, die Farbpaste für ein gesamtes, sich oft über lange Zeit hinziehendes Lieferprogramm auf einmal anzusetzen.

Bei Verwendung styrolfreier, spezieller ungesättigter Polyester, wie sie in DT — OS 2 223 989 beschrieben sind, zeigt es sich, daß bei Verwendung größerer Mengen die Wasseraufnahme der Preßteile drastisch ansteigt. Dieses Ansteigen ist noch nicht bemerkbar, wenn diese Harze nur in Form von MgO- oder CaO-Pasten den Harzmatten zugesetzt werden, weil in diesem Fall nur 1—3 Gewichteile auf 100 Gewichtsteile Polyesterharz eingesetzt werden. Sobald jedoch, wie oben beschrieben, größere Mengen benötigt werden, ist die Erhöhung der Wasseraufnahme nicht mehr tragbar.

Bei Formteilen, die nach einem der üblichen Laminierverfahren hergestellt werden, z.B bei Booten, ist das Laminat im allgemeinen mit einer eingefärbten Feinschicht bedeckt. Werden auf diese Weise Artikel mit häufig wechselnden Farben hergestellt, oder müssen Farben durch Zugabe geringer Mengen anderer Pigmente abgetönt werden, ist es von Vorteil, Pigmentpasten zu verwenden. Als Pastengrundlage kommen Weichmacher oder styrolhaltige Polyester aus den bereits geschilderten Gründen nicht in Frage. Auch Polyester entsprechend DT—OS 2223 989 können nicht eingesetzt werden, da sie die Wasseraufnahme einer Feinschicht so verschlechtern, daß nach kurzer Wasserlagerung des Laminats Blasen und Risse entstehen.

Überraschenderweise wurde nun gefunden, dass sich die oben geschilderten Nachteile durch Verwendung eines Vernetzungsmittelfreien ungesättigten Polyesters mit Säurezahlen von 1—50, vorzugsweise 5—30, und Hydroxylzahlen von 10—80, vorzugsweise 20—50, bei dessen Herstellung pro Mol Diole 1.5—2.5 Mol Dicarbonsäuren und 1.5—2.5 Mol einwertiger Alkohole eingesetzt worden sind, vermeiden lassen.

Gegenstand der Erfindung sind also Dispersionen, die frei von copolymerisierbaren Monomeren sind, bestehend aus
A) 10—80, vorzugsweise 30—60, Gew.-% pulvriger, in B unlöslicher Substanzen, und
B) 90—20, vorzugsweise 70—40 Gew.-%
eines $\alpha,\beta$-äthylenisch ungesättigten Polyesters
aus Dicarbonsäuren und ein- und zweiwertigen
Alkoholen,
wobei sich die Prozentangaben jeweils auf die
Summe der Komponenten A und B beziehen,
dadurch gekennzeichnet,
dass der ungesättigte Polyester B Säurezahlen
von 1—50 und Hydroxylzahlen von 10—80 besitzt und
dass bei seiner Herstellung pro Mol Diole
1.5—2.5 Mol Dicarbonsäuren und 1.5—2.5
Mol einwertiger Alkohole eingesetzt worden
sind.

Eine weiterer Gegenstand der Erfindung ist
die Verwendung der erfindungsgemässen
Dispersionen als Hilfsmittel für $\alpha,\beta$-äthylenisch
ungesättigte Polyesterharze.

$\alpha,\beta$-äthylenisch ungesättigte Polyester im
Sinne der Erfindung sind die üblichen Kondensationsprodukte mindestens einer $\alpha,\beta$-
äthylenisch ungesättigten Dicarbonsäure mit in
der Regel 4 oder 5 C-Atomen oder deren esterbildenden Derivate, ggf. in Abmischung mit bis
zu 100 Mol-%, bezogen auf die ungesättigten
Säurekomponente, mindestens einer aliphatischen gesättigten mit 4—10 C-Atomen oder
einer aromatischen oder cycloaliphatischen
Dicarbonsäure mit 8—10 C-Atomen oder deren
esterbildenden Derivate mit mindestens einer
Polyhydroxyverbindung, insbesondere Dihydroxyverbindung, mit 2—8 C-Atomen — also
Polyester, wie sie bei J. Björksen et al,
"Polyesters and their Applicants", Reinhold Publishing Corp., New York 1956, beschrieben
sind.

Beispiele für bevorzugt zu verwendende
ungesättigte Dicarbonsäuren oder ihre Derivate
sind Maleinsäureanhydrid und Fumarsäure.
Verwendet werden können z.B. jedoch auch
Mesaconsäure, Citraconsäure, Itaconsäure oder
Chlormaleinsäure. Beispiele für die zu
verwendenden aliphatischen gesättigten, aromatischen und cycloaliphatischen Dicarbonsäuren oder ihre Derivate sind Phthalsäure oder
Phthalsäureanhydrid, Isophthalsäure, Terephthalsäure, Hexa- oder Tetrahydrophthalsäure
bzw. deren Anhydride, Endomethylentetrahydrophthalsäure oder deren Anhydrid,
Bernsteinsäure bzw. Bernsteinsäureanhydrid
und Bernsteinsäureester und -chloride, Adipinsäure, Sebacinsäure. Um schwerentflammbare
Harze herzustellen, können z.B. Hexachlorendomethylentetrahydrophthalsäure (Hetsäure),
Tetrachlorphthalsäure oder Tetrabromphthalsäure verwendet werden. Bevorzugt zu verwendende Polyester enthalten Maleinsäurereste,
die bis zu 25 Mol-% durch Phthalsäure- oder
Isophthalsäurereste ersetzt werden können.
Als zweiwertige Akholole können Äthylenglykol,
Propandiol-1,2, Propandiol-1,3, Diäthylenglykol, Dipropylenglykol, Butandiol-1,2-1,3, -1,4,
-2,3, Neopentylglykol, Hexandiol-1,6, 2,2-Bis
(4-hydroxycyclohexyl)-propan, bis-oxalkyliertes Bisphenol A, Perhydrobisphenol und andere
eingesetzt werden. Bevorzugt verwendet werden Oligomere von Äthylenoxid, Propylenoxid und Butenoxid, insbesondere Diäthylenglykol, Triäthylenglykol, Tetraäthylenglykol und Dipropylenglykol, Tripropylenglykol sowie entsprechende Oligomere von den verschiedenen
Butenoxiden.

Weitere Modifikationen sind möglich durch
Einbau bis zu 10 Mol-%, bezogen auf die
Alkohol- bzw. Säurekomponente, drei- und
vierwertiger Alkohole mit 6—12 C-Atomen, wie
Trimethylolpropan, Glycerin und Pentaerythrit
sowie von dreiund vierbasischen Carbonsäuren
mit 6—12 C-Atomen, wie z.B. Trimellithsäure
und Benzoltetracarbonsäure. Jedoch empfiehlt
es sich um eine Gelierung und damit eine Viskositätserhöhung des Polyesters zu vermeiden, bei
Verwendung von tri- und höherfunktionellen
Verbindungen soviel monofunktionelle Ausgangskomponenten einzusetzen, dass pro Mol
trifunktionelle Verbindung mindestens ein Mol
monofunktionelle Verbindung und pro Mol
tetrafunktionelle Verbindung mindestens zwei
Mol monofunktionelle Verbindung gewählt
werden.

Als einwertige Alkohole kommen aliphatische, cycloaliphatische, aromatische und alkylaromatische Alkohole mit 1—18 C-Atomen
in Betracht, z.B. Methanol, Äthanol, n- oder Isopropanol, n-, Iso- oder tert.-Butanol, die Pentanole, Hexanole, Heptanole, Octanole wie beispielsweise $\alpha$-Äthylhexanol, bis zu langkettigen,
wie beispielsweise Stearyl alkohol. Ein Beispiel
für aromatische, einwertige Alkohole ist Benzylalkohol. Als Beispiel für cycloaliphatische,
einwertige Alkohole sei Cyclohexanol genannt.
Auch ungesättigte Monoalkohole, wie beispielsweise Allylalkohol oder Crotonalkohol,
können Verwendung finden.

Die als Zahlenmittel bestimmten Molekulargewichte der Polyester B sollen zwischen
250 und 3000 liegen (dampfdruckosmometrisch gemessen in Dioxan und Aceton, bei
differierenden Werten wird der niedrigere als
korrekt angesehen), die Viskositäten der
Polyester B zwischen 200 und 1000 cP.

Als pulvriger Substanzen A kommen anorganische oder organische Pigmente, Thixotropiermittel, anorganische Eindickungsmittel, Füllstoffe etc. in Frage.

Als anorganische Eindickungsmittel eignen
sich ausser Magnesiumoxid auch Magnesiumhydroxid, Calciumoxid, Calciumhydroxid, Zinkoxid, Aluminate, Titanate, Aluminiumoxide und
dessen Mischoxide sowie Mischungen der genannten Produkte, weiterhin Portlandzement.
Bevorzugt sind die Oxide und Hydroxide der
Elemente der 2. und 3. Hauptgruppe des
periodischen Systems, insbesondere Magnesiumoxid.

Als besonders wertvoll haben sich Dispersionen aus 30 bis 60 Gew.-% Oxiden und/oder
Hydroxiden der 2. und 3. Gruppe des periodischen Systems, vornehmlich Magnesiumoxid und/oder Magnesiumhydroxid, und 70 bis 40 Gew.-% eines Polyesters aus Maleinsäure und/oder Fumarsäure, Dipropylenglykol und $\alpha$-Äthylhexanol erwiesen.

Die erfindungsgemässen Dispersionen können ausser Oxiden und/oder Hydroxiden der 2. und 3. Gruppe des periodischen Systems und den genannten speziellen Polyestern weitere Zusatzstoffe, z.B. solche, die die Sedimentation und die Thixotropie beeinflussen, enthalten. Die Thixotropie und Sedimentation beeinflussen vor allem anorganische Thixotropiermittel, wie hochdisperse Kieselsäuren, Produkte mit asbestähnlicher Silicatstruktur, Bentone oder organische Thixotropiermittel, wie hydrierte Rizinusölfettsäuren, vorzugsweise CONH- oder OCONH-Gruppen enthaltende organische Verbindungen. Diese vorzugsweise zu verwendenden organische Thixotropiermittel können den erfindungsgemässen Dispersionen zugemischt oder aber in die Polyester B eingebaut werden.

Die besonders bevorzugten CONH- oder OCONH-Gruppen tragenden organischen Verbindungen sind solche, die z.B. in den DT—AS 1 020 428, 1 106 015, 1 182 816, 1 217 611, 1 273 192, 1 569 331 und 1 745 347 beschrieben sind. Im einzelnen handelt es sich dabei um.

a) modifizierte ungesättigte Polyester, vorzugsweise mit OH-Zahlen über 100 und mit Säurezahlen bis 30, die durch Reaktion von ungesättigten linearen oder verzweigten, hydroxylgruppenhaltigen Polyestern mit ein- oder mehrwertigen $\beta,\gamma$-ungesättigten Ätheralkoholen und Polyisocyanaten erhältlich sind. Als besonders geeignet erweisen sich solche modifizierten ungesättigten Polyester, deren Herstellung in Gegenwart von Sauerstoff vorgenommen worden ist.

b) Polyesteramide, deren Mischungen aus 3 Gewichtsteilen Polyesteramid und 7 Gewichtsteilen Lackbenzin bei Raumtemperatur inhomogen sind und deren Gehalt an polaren Gruppen bis zu 35, vorzugsweise 14—30, Gew.-% beträgt, wobei unter inhomogenen Mischungen solche verstanden werden, die eine zweite flüssige oder feste Phase aufweisen und infolgedessen gegebenenfalls eine Trübung zeigen. Vorzugsweise werden solche Polyesteramide benutzt, die unter Verwendung von Polycarbonsäuren, Polyaminen mit mindestens zwei ·primären Aminogruppen und entweder Hydroxycarbonsäuren oder Polyalkoholen oder Aminoalkoholen oder Mischungen dieser Hydroxyverbindungen hergestellt sind. Bevorzugte Polyesteramide weisen ein Amidgruppen/Estergruppen-Verhältnis von 0.1 bis 2.2 und Erweichungspunkte unter 230, insbesondere unter 200°C, auf.

c) polymere Amide mit einem mittleren Molekulargewicht $\overline{M}_n$ von 500—10 000, die Reste von Monoaminomonocarbonsäuren und/oder Diaminen und Dicarbonsäuren aufweisen und deren an den Carbonamidstickstoffatomen befindliche Wasserstoffatome ganz oder teilweise durch wenigstens 4 C-Atome und wenigstens 1 Oxasauerstoffatom aufweisende Mono- bzw. Polyoxaalkylreste substituiert sind. Beispiele für solche Grund-polymere sind Poly-$\omega$-caprolactam und Poly-$\omega$-capryllactam, ferner die Polykondensate aus Tetra-, Hexa- oder Octamethylendiamin und Bernstein-, Adipin-, Kork- oder Sebacinsäure. Durch Oxalkylierung können daraus die thixotropierenden polymeren Amine erhalten werden.

d) Polyurethane mit mittleren Molekularge-wichten $\overline{M}_n$ von 250—5 000, insbesoi:dere von 500—3 000, die

1. urethanartig verknüpft, Reste zweiwer-tiger Carbaminsäuren und Reste zweiwer-tiger Hydroxylverbindungen sowie ge-gebenenfalls zusätzlich Reste tiefer- bzw. höherwertiger Carbaminsäuren und/oder Reste tiefer- bzw. höherwertiger Hydroxylverbindungen aufweisen,

2. von äthylenisch ungesättigten Gruppen, Resten mehr als 9 C-Atome aufweisender Fettsäuren, Resten von Addukten aus solchen Fettsäuren sowie Isocyanat-gruppen bzw. wie diese reagierende Gruppen frei oder praktisch frei sind, und

3. Im Gemisch mit dem zu thixotropierenden ungesättigten Polyesterharz homogene und klare Lösungen bilden.

e) Cyclohexylamide gesättigter höherer Fettsäuren mit mindestens 10 C-Atomen, wie der Caprinsäure, der Myristinsäure der Pal-mitinsäure, der Stearinsäure, der Oxystearin-säure, der Behensäure, oder Mischungen dieser Cyclohexylamide; z.B. sind auch die Cyclohexylamide des sogenannten "Hauptlaufs" der Paraffinoxidation geeignet.

Die Thixotropiermittel können bei der Her-stellung der erfindungsgemässen Dispersion einfach zugemischt, falls erwünscht jedoch auch durch Verkochen mit den Ausgangskomponenten des ungesättigten Polyesters B bei dessen Herstellung in diesen einkondensiert oder nach dessen Herstellung an diesen ankondensiert werden.

Besonders bevorzugte, derart thixotropierte Polyester sind z.B. Unsetzungsprodukte, die aus hydroxylgruppenhaltigen ungesättigten Polyestern mit einer hydroxylzahl von 10—80 und einer Säurezahl von 1—50 und überwiegend eine freie Isocyanatgruppe tragenden Umsetzungsprodukten aus Polyisocyanaten und Monohydroxylverbindungen hergestellt werden.

Thixotropiermittel, die such vorzüglich zum Einbau in oder zum Ankondensieren an ungesät-. tigte Polyester B eignen, sind die Isocyanate. Im einzelnen seien aliphatische, cycloaliphatische und aromatische Monoisocyanate mit mindestens 4 C-Atomen, wie z.B. Dodecylisocyanat, Phenylisocyanat, Naphthylisocyanat, Cyclohexylisocyanat sowie die $C_1$—$C_4$-Alkylderivate der genannten Isocyanate, Diisocyanate wie z.B 1,6-Hexamethylendiisocyanat,

Isophorondiisocyanat, 4,4'-Dicyclohexylmethandiisocyanat, 1-Methyl-cyclohexan-2,4-und -2,6-diisocyanat sowie die Gemische dieser Isomeren, 2,4- und 2,6-Toluylendiisocyanat sowie die Gemische dieser Isomeren, Naphthylen-1,5-diisocyanat, 4,4'-Diphenylmethandiisocyanat, Xylylen-1,3- und -1,4-diisocyanat, höhermolekulare Polyisocyanate, wie sie aus Polyisocyanaten und Hydroxylgruppen aufweisenden Verbindungen (vgl. z.B. DT—PS 870, 400 und 909,186) gewonnen werden können, ferner Triisocyanate wie 4,4'-Triphenylmethantriisocyanat und Polyarylpolyalkylenpolyisocyanate, wie sie durch Anilin-Aldehyd-(z.B. Formaldehyd)-Kondensation und anschliessende Phosgenierung erhalten werden, oder di- oder trimerisiertes Toluylendiisocyanat genannt.

Von den genannten Polyisocyanaten sind Diisocyanate und Polyisocyanate bevorzugt, deren Funktionalität durch Umsatz mit Zerewitinoff-H-aciden, monofunktionellen Verbindungen z.B. monofunktionellen Alkoholen und/oder Säuren auf 2 oder 1 verringert werden kann.

Thixotropiermittel werden in der Regel in Mengen von 0,1—10, vorzugsweise 1—5 Gew.-%, bezogen auf Polyesterharz, eingesetzt.

Weiterhin können die erfindungsgemässen Dispersionen organische und/oder anorganische Füllstoffe in fasriger und/oder pulvriger Form enthalten, z.B. Kaolin, Magnesium- und Calciumcarbonat, Quarzmehl, Asbestmehl, Thermoplastenpulver, z.B. Polyäthylenpulver und andere makromolekulare vernetzte und nicht vernetzte Produkte in Pulverform. Als vernetzte makromolekulare Substanzen kommen z.B. in Betracht: gemahlene duromere Kunststoffe, z.B. gehärtetes ungesättigtes Polyesterharz, gehärtetes Melamin- und Harnstoff-Formaldehyd-Harz. Fasrige Füllstoffe sind z.B. Glasfaserabschnitte, Asbestfasern, "organische Chemiefasern" und Naturfasern.

Bevorzugtes Anwendungsgebiet der erfindungsgemässen Gemische ist die Verwendung zur Eindickung von ungesättigten Polyester-Lösungen in copolymerisierbaren Monomeren zur Herstellung von Harzmatten und Pressmassen. Da derartige Ansätze Peroxide, bevorzugt organische Peroxide, enthalten müssen, um diese zu Formteilen verarbeiten zu können, kann es zweckmässig sein, die organischen Peroxide bereits in die erfindungsgemässen Dispersionen einzuarbeiten. Als Peroxide für Harzmatten und Pressmassen kommen beispielsweise in Betracht: Benzoylperoxid, tert.-Butylperbenzoat, Perketale usw. Besonders vorteilhaft sind die Perketale. Sie zeigen die grösste Lagerstabilität in Gegenwart basischer Produkte.

Die erfindungsgemässen Dispersionen können den zu modifizierenden ungesättigten Polyesterharzen in Mengen von 1—30 Gew.-%, bezogen auf ungesättigtes unmodifiziertes Polyesterharz, zugemischt werden. Enthalten die erfindungsgemässen Dispersionen anorganische Eindickungsmittel, so werden die Mengen so gewählt, dass den ungesättigten Polyesterharzen 0,1—10 Gew.-%, vorzugsweise 0,5—2,5 Gew.-%, bezogen auf ungesättigtes unmodifiziertes Polyesterharz, anorganischer Eindickungsmittel zugesetzt werden.

Die ungesättigten Polyester derjenigen Polyesterharze, zu deren Modifizierung die erfindungsgemässen Dispersionen eingesetzt werden können, können aus den oben für die Herstellung des Polyesters B aufgezählten Komponenten hergestellt werden.

Die Säurezahlen der Polyester sollen zwischen 10 und 100, vorzugsweise zwischen 10 und 40, die OH-Zahlen zwischen 10 und 150, vorzugsweise zwischen 20 und 100, und die als Zahlenmittel gemessenen Molekulargewichte zwischen ca. 500 und 5000, vorzugsweise zwischen ca. 1 000 und 3 000 liegen (dampfdruckosmometrisch gemessen in Dioxan und Aceton; bei differierenden Werten wird der niedrigere als der korrekte angesehen).

Als copolymerisierbare Vinyl- und Vinylidenverbindungen für die modifizierten Polyesterharze eignen sich in der Polyestertechnologie gebräuchliche ungesättigte Verbindungen, die bevorzugt $\alpha$-substituierte Vinylgruppen oder $\beta$-substituierte Allylgruppen tragen, bevorzugt Styrol; aber auch beispielsweise Kernchlorierte und -alkylierte bzw. alkenylierte Styrole, wobei die Alkylgruppen 1—4 Kohlenstoffatome enthalten können, wie z.B. Vinyltoluol, Divinylbenzol, $\alpha$-Methylstyrol, tert.-Butylstyrol, Chlorstyrole; Vinylester von Carbonsäuren mit 2—6 Kohlenstoffatomen, bevorzugt Vinylacetat; Vinylpyridin, Vinylnaphthalin, Vinylcyclohexan, Acylsäure und Methacrylsäure und/oder ihre Ester (vorzugsweise Vinyl-, Allyl- und Methallylester) mit 1—4 Kohlenstoffatomen in der Alkoholkomponente, ihre Amine und Nitrile, Maleinsäureanhydrid, -halb- und diester mit 1—4 Kohlenstoffatomen in der Alkoholkomponente, -halb- und -diamine oder cyclische Imide wie N-Methylmaleinimid oder N-Cyclohexylmaleinimid; Allylverbindungen wie Allylbenzol und Allylester wie Allylacetat, Phthalsäurediallylester, Isophthalsäurediallylester, Fumarsäurediallylester, Allylcarbonate, Diallylcarbonate, Triallylphosphat und Triallylcyanurat. Diese Monomeren sind dieselben, von denen die erfindungsgemässen Dispersionen frei sein sollen.

"Unlöslich" soll in der vorliegenden Erfindung bedeuten, dass bei 30- minütigem Erhitzen auf 80°C im Polyester B weniger als 1 Gew.-% der fraglichen Substanz in Lösung gehen.

Die in den nachfolgenden Beispielen genannten Prozente bedeuten Gewichtsprozente, Teile sind Gewichtsteile.

*Beispiele*

Harz 1 (Vergleich gemäss DT—OS 2 223 989)

Ein Gemisch aus 2536 Teilen $\alpha$-Äthylhexansäure, 5706 Teilen Dipropylenglykol und 1738 Teilen Maleinsäureanhydrid, entsprechend einer molaren Zusammensetzung von 1,0 : 2,4 : 1,0 werden in 8 Std. auf 200°C unter Durchleiten von Stickstoff aufgeheizt und bei dieser Temperatur bis zum Erreichen einer Säurezahl von 22 und einer Viskosität von 380 mPa.s. (bei 20°C gemessen) gehalten. Das erhaltene Produkt hat eine Hydroxylzahl von 200.

Harz 2

Ein Gemisch aus 2187 Teilen Benzylalkohol, 2633 Teilen 2-Äthylhexanol-1, 3453 Teilen Maleinsäureanhydrid und 2360 Teilen Dipropylenglykol entsprechend einem Mol-Verhältnis von 1,15 : 1,15 : 2,20 : 1,00 werden unter Durchleiten von Stickstoff in 14 Std. auf 210°C aufgeheizt und bei dieser Temperatur bis zum Erreichen einer Säurezahl von 21 und einer Viskosität von 320 mPa.s (bei 20°C gemessen) gehalten. Die Hydroxyzahl beträgt dann 40.

Harz 3

Ein Gemisch aus 9140 Teilen Benzylalkohol, 10 998 Teilen 2-Äthylhexanol-1, 16 583 Teilen Maleinsäureanhydrid und 11 331 Teilen Dipropylenglykol entsprechend einem Molverhältnis von 1,0 : 1,0 : 2,0 : 1,0 wird nach Zusatz von 4,5 Teilen Hydrochinon in 7 Std. auf 220°C aufgeheizt und unter Durchleiten von Stickstoff bei dieser Temperatur bis zu einer Säurezahl von 21 und einer Viskosität von 710 mPa.s (bei 20°C gemessen) gehalten. Das Produkt hat eine Hydroxylzahl von 15.

Harz 4

Zu 571 Teilen Toluylendiisocyanat (Gemisch aus den 2,4-und 2,6-Isomeren) werden 247 Teile Isopropanol (Molverhältnis 1,05 : 1,0) so zugegeben, dass eine Temperatur von 75°C nicht überschritten wird. Die Reaktion wird fortgeführt, bis der NCO-Gehalt unter 19 % beträgt.

2 Teile dieses so erhaltenen Thixotropierträgers werden zu 120 Teilen des nach Beispiel 2 erhaltenen Polyesters gegeben und 3 Std. bei 120°C zur Reaktion gebracht. Dabei steigt die Viskosität auf 410 mPa.s.

Mit den Harzen 1 bis 4 wurden folgende Versuche durchgeführt:

*Beispiel A*

Die Harze 1—4 wurden mit einem handelsüblichen Polyesterharzgemisch, das typisch für die Verwendung in Feinschichten ist, nach folgender Rezeptur gemischt:

|  | Teile |
|---|---|
| Polyesterharz X | 60 |
| Polyesterharz Y | 25 |
| Harze 1—4 | 15 |
| Benzoylperoxid-Paste, 50%ig in Weichmacher | 2 |

Aus dem Harzgemisch wurden Gießplatten (3 mm dick) hergestellt, die bei 75°C 3 Std. gehärtet und 15 Std. bei 100°C getempert wurden. Aus diesen Gießplatten wurden Prüfkörper (50 × 50 mm²) geschnitten, die in destilliertem Wasser bei Raumtemperatur 50 Tage gelagert wurden. Danach wurde die Wasseraufnahme gemäss DIN 53 475 bestimmt.

Als Vergleich dienten Platten, die aus einem Harzgemisch gemäss folgender Rezeptur hergestellt wurden:

|  | Teile |
|---|---|
| Polyesterharz X | 70 |
| Polyesterharz Y | 30 |
| Benzoylperoxid-Paste, 50%ig in | 2 |

Ergebnisse

| Harzzusatz | Wasseraufnahme (%) |
|---|---|
| ohne | 1,76 |
| Harz 1 | 2,42 |
| Harz 2 | 1,75 |
| Harz 3 | 1,77 |
| Harz 4 | 1,20 |

Versuch B

Aus den gemäss Versuch A hergestellten Platten wurden Prüfkörper (30 × 100 mm²) hergestellt, die 5 Monate in destilliertem Wasser bei Raumtemperatur gelagert wurden. Danach wurde das Aussehen beurteilt.

Ergebnisse

| Harzzusatz | Aussehen |
|---|---|
| ohne | einige winzige Bläschen |
| Harz 1 | zerstört |
| Harz 2 | ohne Befund |
| Harz 3 | einige winzige Bläschen |
| Harz 4 | ohne befund |

Versuch C

Nach folgender Rezeptur wurde ein Harzmattenansatz hergestellt:

|                          | Teile |
| ------------------------ | ----- |
| Polyesterharz Z          | 85    |
| Harze 1—4                | 15    |
| Kreide                   | 100   |
| Zinkstearat              | 4     |
| Magnesiumoxid            | 1,5   |
| Benzoylperoxid-Paste, 50%ig in Weichmacher | 2 |

Der ansatz wurde in 3-mm-Plattenformen gegossen und vier Tage eindicken gelassen. Danach wurden die Platten bei 75°C 3 Std. im Wasserbad gehärtet und dann 15 Std. bei 100°C getempert. Aus den Platten wurden Prüfkörper (50 x 50 mm²) geschnitten und daran die Wasseraufnahme nach DIN 53 475 bestimmt. Als Vergleich dienten Platten aus einem Ansatz, der 100 Teile Polyesterharz Z ohne Harzzusatz enthielt.

Ergebnisse

| Harzzusatz | Wasseraufnahme (%) |
| ---------- | ------------------ |
| ohne       | 1,38               |
| Harz 1     | 5,79               |
| Harz 2     | 1,53               |
| Harz 3     | 1,99               |
| Harz 4     | 1,41,              |

Kennzeichen der verschiedenen Polyesterharze X, Y, Z

| Polyesterharz | Komponenten des Polyesters | Molverhältnis | SZ | OHZ | Viskosität bei 20°C [m.Pa.s.] | Styrolgehalt |
| ------------- | -------------------------- | ------------- | -- | --- | ----------------------------- | ------------ |
| X | Maleinsäure, Phthalsäure, Propandiol, Di-äthandiol | 0,5:0,5:0,5:0,5 | 22 | 27 | 1850 | 31 % |
| Y | Maleinsäure, Adipinsäure, Äthandiol, Diäthandiol, | 0,3:0,7:0,8:0,2 | 20 | 25 | 950 | 28 % |
| Z | Maleinsäure, Phthalsäure, Propansäure, Dipropandiol | 0,8:0,2:0,8:0,2 | 19 | 35 | 1550 | 35 % |

**Patentansprüche**

1. Dispersionen, die frei von copolymerisierbaren Monomeren sind, bestehend aus
A) 10—80, vorzugsweise 30—60, Gew.-% pulvriger, in B unlöslicher Substanzen
B) 90—20, vorzugsweise 70—40, Gew.-% eines α,β-ethylenisch ungesättigten Polyesters aus Dicarbonsäuren und ein- und zweiwertigen Alkoholen,
wobei sich die Prozentangaben jeweils auf die Summe der Komponenten A und B beziehen,
dadurch gekennzeichnet,
daß der ungesättigte Polyester B Säurezahlen von 1—50 und Hydroxylzahlen von 10—80 besitzt und
daß bei seiner Herstellung pro Mol Diole 1,5—2,5 Mol Dicarbonsäuren und 1,5—2,5 Mol einwertiger Alkohole eingesetzt worden sind.

2. Verwendung der Dispersionen nach Anspruch 1 als Hilfsmittel für α,β-ethylenisch ungesättigte Polyesterharze.

**Claims**

1. Dispersions which are free from copolymerisable monomers and consist of
A) 10—80, preferably 30—60, % by weight of powdery substances insoluble in B and
B) 90—20, preferably 70—40, % by weight of an α,β-ethylenically unsaturated polyester obtained from dicarboxylic acids and monohydric and dihydric alcohols,
the percentages in each case relating to the sum of the components A and B, characterised in that the unsaturated polyester B has acid numbers of 1—50 and hydroxyl numbers of 10—80 and that 1.5—2.5 mols of dicarboxylic acids and 1.5—2.5 mols of mono-hydric alcohols have been employed, per mol of diols, in its preparation.

2. Use of the dispersions according to Claim 1 as assistants for $\alpha,\beta$-ethylenically unsaturated polyester resins.

## Revendications

1. Dispersions, qui sont exemptes de monomères copolymérisables, consistant en
A) 10 à 80, de préférence 30 à 60, % en poids de substances insolubles dans B, et
B) 90 à 20, de préférence 70 à 40, % en poids d'un polyester $\alpha,\beta$-éthylénique dérivé d'acides dicarboxyliques et d'alcools monoet divalents,

les pourcentages étant chaque fois rapportés à la somme des composants A et B,

caractérisées en ce que

le polyester insaturé B possède des indices d'acide de 1—50 et des indices d'hydroxyle de 10—80 et en ce que

l'on a utilisé pour sa préparation, par mole de diol, 1,5—2,5 moles d'acides dicarboxyliques et 1,5—2,5 moles d'alcools monovalents.

2. Utilisation des dispersions selon la revendication 1 comme agents auxiliares pour les résines de polyester $\alpha,\beta$-éthyléniques.